# EUROPÄISCHE PATENTANMELDUNG

(11) **EP 0 766 448 A2**
(43) Veröffentlichungstag der Anmeldung: **02.04.1997**
(21) Anmeldenummer: 96115051.3
(22) Anmeldetag: 19.09.1996
(51) Int. Cl.: H04M 19/08

(54) **Netzversorgtes Telekommunikationsendgerät mit einem über eine endgerätespezifische digitale Signalverarbeitungseinrichtung an ein Telekommunikationsnetz angeschlossenen Fernsprechhandapparat**

(30) Priorität: 29.09.1995 DE 19536586
(71) Anmelder: SIEMENS AKTIENGESELLSCHAFT, 80333 München (DE)
(72) Erfinder: Steinfeld, Uwe, Dipl.-Ing., 46499 Hamminkeln (DE); Nijmolen, Willem, 7102 DK Winterswijk (NL)

(57) **Zusammenfassung**

Um mit einem netzversorgten Telekommunikationsendgerät (K-BS) mit einem über eine endgerätespezifische digitale Signalverarbeitungseinrichtung (SVEG) an ein Telekommunikationsnetz (TKN) angeschlossenen Fernsprechhandapparat (FHA) beim Netzspannungsausfall wenigstens telefonieren zu können, wird der Fernsprechhandapparat (FHA) unmittelbar - d.h. ohne Zwischenschaltung der digitalen Signalverarbeitungseinrichtung (SVEG)- über eine endgerätespezifische Telekommunikationseinheit (TKE) und einer Telekommunikationsanschlußeinheit (TAE) bzw. einer Nebenstellenanlage (NStA) mit dem Telekommunikationsnetz (TKN) verbunden. Die für diesen Fernsprechnotbetrieb erforderliche elektrische Energie wird dabei aus dem Telekommunikationsnetz (TKN) entnommen.

## Beschreibung

Die Erfindung betrifft ein netzversorgtes Telekommunikationsendgerät mit einem über eine endgerätespezifische digitale Signalverarbeitungseinrichtung an ein Telekommunikationsnetz angeschlossenen Fernsprechhandapparat gemäß dem Oberbegriff des Patentanspruches 1.

Telekommunikationsendgeräte werden als Sende- und/oder Empfangsgeräte in einem Nachrichtensystem mit einer Nachrichtenübertragungsstrecke zwischen einer Nachrichtenquelle und einer Nachrichtensenke zur Nachrichtenverarbeitung und -übertragung eingesetzt. Die Nachrichtenverarbeitung und -übertragung kann dabei in einer bevorzugten Übertragungsrichtung (Simplex-Betrieb) oder in beiden Übertragungsrichtungen (Duplex-Betrieb) erfolgen. Außerdem kann die Nachrichtenverarbeitung analog oder digital und die Nachrichtenübertragung drahtgebunden oder drahtlos (z.B. nach diversen Funkstandards wie DECT, GSM, WCPS, AMPS etc.) sein.

"Nachricht" ist ein übergeordneter Begriff, der sowohl für den Sinngehalt (Information) als auch für die physikalische Repräsentation (Signal) steht. Signale können dabei z.B.
(1) Bilder
(2) gesprochene Wörter
(3) geschriebene Wörter
(4) verschlüsselte Wörter oder Bilder
repräsentieren.

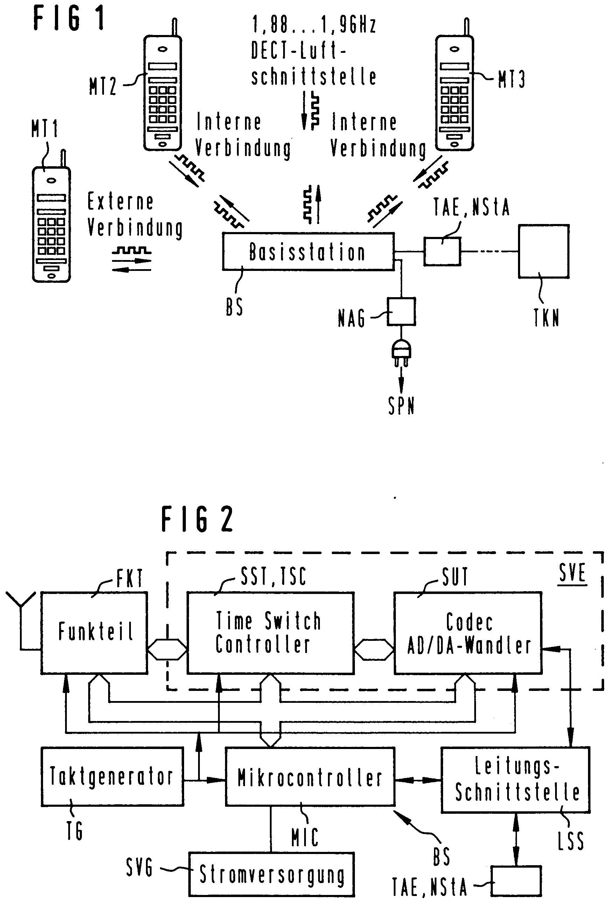

Telekommunikationsgeräte der vorstehend umrissenen Art sind beispielsweise DECT-Schnurlostelefone (**D**igital **E**uropean **C**ordless **T**elecommunication; vgl. Nachrichtentechnik, Electronic, 42 (1992) Jan./Feb., Nr. 1, Berlin, DE; U. Pilger: "Struktur des DECT-Standards", Seiten 23 bis 29), die in ihrer einfachsten Form gemäß der Darstellung in FIG 1 aufgebaut sein können (vgl. telcom report 16 (1993), Heft 1, Seiten 26 und 27). Eine DECT-Basisstation BS kann dabei über eine für den Frequenzbereich zwischen 1,88 und 1,90 GHz ausgelegte DECT-Luftschnittstelle minimal zwölf Verbindungen zu DECT-Mobilteilen parallel aufbauen und unterhalten. Die FIG 1 zeigt beispielsweise
1) den Aufbau einer über die Basisstation BS und einer Telekommunikationsanschlußeinheit TAE bzw. einer Nebenstellenanlage NStA geführten externen Verbindung zwischen einem ersten Mobilteil MT1 und einem fernen Kommunikationsteilnehmer eines Telekommunikationsnetzes TKN,
2) den Aufbau einer über die Basisstation BS geführten internen Verbindung zwischen einem zweiten Mobilteil MT2 und einem dritten Mobilteil MT3.

Die DECT-Basisstation BS ist für die ihr zugeordneten Mobilteile im Prinzip eine Schnurlos-Nebenstellenanlage mit Verbindung zu der Telekommunikationsanschlußeinheit TAE bzw. der Nebenstellenanlage NStA und der Anschlußmöglichkeit an ein Spannungsnetz SPN (z.B. das 220V-Wechselspannungsnetz) über ein Netzanschlußgerät NAG.

FIG 2 zeigt ausgehend von der Druckschrift Components 31 (1993), Heft 6, Seiten 215 bis 218; S. Althammer, D. Brückmann: "Hochoptimierte IC's für DECT-Schnurlostelefone" den prinzipiellen Schaltungsaufbau der Basisstation BS nach FIG 1. Dieser besteht aus einem Funkteil FKT, einer Signalverarbeitungseinheit SVE mit einem als Time Switch Controller TSC mit Vermittlungsfunktionen (Switch-Funktionen) ausgebildeten Signalsteuerungsteil SST und einem als CODEC und AD/DA- Wandler ausgebildeten Signalumformungsteil SUT, einem Taktgenerator TG, einem Mikrocontroller MIC, einer Leitungsschnittstelle LSS zur Telekommunikationsanschlußeinheit TAE bzw. zur Nebenstellenanlage NStA und einer Stromversorgung SVG, die in der dargestellten Weise miteinander verbunden sind.

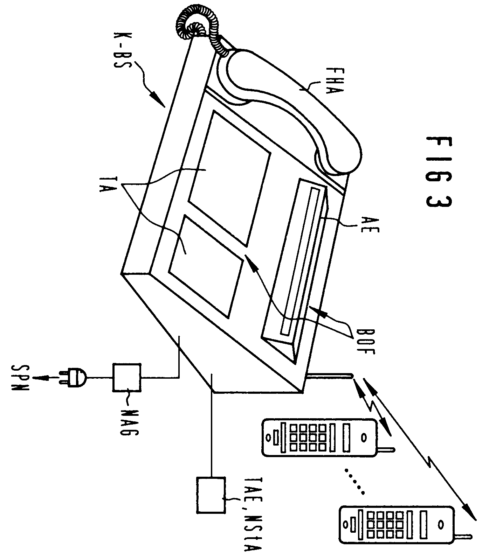

Die in der FIG 1 und FIG 2 dargestellte DECT-Basisstation BS kann nun gemäß FIG 3 zu einer DECT-spezifischen Komfort-Basisstation K-BS erweitert werden, bei der ein Fernsprechhandapparat FHA über die digitale Signalverarbeitungseinheit SVE der Basisstation BS nach FIG 2 und der Telekommunikationsanschlußeinheit TAE bzw. der Nebenstellenanlage NStA an das Telekommunikationsnetz TKN angeschlossen ist.

Entsprechend der Erweiterung der DECT-Basisstation BS nach FIG 1 zu einer DECT-spezifischen Komfort-Basisstation (FIG 3) können ganz allgemein die eingangs angesprochenen Telekommunikationsendgeräte zu Telekommunikationsendgeräten mit einem an eine endgerätespezifische digitale Signalverarbeitungseinrichtung angeschlossenen Fernsprechhandapparat erweitert werden.

Die Komfort-Basisstation K-BS ist wie die Basisstation BS nach FIG 1 über die für den Frequenzbereich zwischen 1,88 und 1,90 GHz ausgelegte DECT-Luftschnittstelle mit den DECT-Mobilteilen, über die Telekommunikationsanschlußeinheit TAE bzw. dieer Nebenstellenanlage NStA mit dem Telekommunikationsnetz TKN und über das Netzanschlußgerät NAG mit dem Spannungsnetz SPN verbunden. Die Komfort-Basisstation K-BS weist außerdem eine Bedienoberfläche BOF mit einer Tastatur TA und einer Anzeigeeinrichtung AE (Display) auf.

Weder bei der in den FIG 1 und 2 dargestellten Basisstation BS noch bei der in der FIG 3 dargestellten Komfort-Basisstation K-BS ist bei einem Netzspannungsausfall im Spannungsnetz SPN eine drahtlose und/oder drahtgebundene Übertragung von Sprache möglich. In gleicher Weise ist bei den Telekommunikationsendgeräten mit dem an die endgerätespezifische digitale Signalverarbeitungseinrichtung angeschlossenen Fernsprechhandapparat bei einem Netzspannungsausfall im Spannungsnetz SPN keine drahtlose und/oder drahtgebundene Übertragung von Sprache, Daten, Bild und/oder Text möglich.

Die der Erfindung zugrundeliegende Aufgabe besteht darin, daß mit einem netzversorgten Telekommunikationsendgerät mit einem über eine endgerätespezifische digitale Signalverarbeitungseinrichtung an ein Telekommunikationsnetz angeschlossenen Fernsprechhandapparat beim Netzspannungsausfall wenigstens telefoniert werden kann.

Diese Aufgabe wird ausgehend von dem in dem Oberbegriff des Patentanspruches 1 definierten netzversorgten Telekommunikationsendgerät durch die in dem kennzeichnenden Teil des Patentanspruches 1 angegebenen Merkmale gelöst.

Die der Erfindung zugrundeliegende Idee besteht darin, einen Fernsprechnotbetrieb eines Telekommunikationsendgerätes der eingangs genannten Art - z.B. die beschriebene und erläuterte Komfort-Basisstation nach FIG 3 - dadurch herzustellen, daß der Fernsprechhandapparat unmittelbar - d.h. ohne Zwischenschaltung der digitalen Signalverarbeitungseinrichtung - über eine endgerätespezifische Telekommunikationsschaltung und einer Telekommunikationsanschlußeinheit bzw. einer Nebenstellenanlage mit dem Telekommunikationsnetz verbunden wird. Die für diesen Fernsprechnotbetrieb erforderliche elektrische Energie wird aus dem Telekommunikationsnetz entnommen. In dem Fernsprechnotbetrieb kann eine externe Verbindung zwischen dem Fernsprechhandapparat des Telekommunikationsendgerätes und einem fernen Teilnehmer aufgebaut werden. Interne Telekommunikationsverbindungen zwischen den dem Telekommunikationsendgerät zugeordneten Mobilteilen und dem Fernsprechhandapparat sind aufgrund der nachrichtentechnisch kurzgeschlossenen digitalen Signalverarbeitungseinrichtung des Telekommunikationsendgerätes nicht mehr möglich.

Vorteilhafte Weiterbildungen der Erfindung sind in den Unteransprüchen angegeben.

Nach Anspruch 2 weist die Zentrale Steuerung nach Anspruch 1 zwei Mikroprozessoren (Mikrocontroller) auf. Diese Zwei-Prozessorlösung hat gegenüber einer Ein-Prozessorlösung den Vorteil, daß eine Verteilung der der Zentralen Steuerung in dem Telekommunikationsendgerät zugewiesenen Aufgaben und Funktionen möglich ist. Dadurch kann für die Realisierung des Fernsprechnotbetriebs der den Fernsprechnotbetrieb steuernde Mikroprozessor entsprechend den Anforderungen im Fernsprechnotbetrieb ausgelegt werden; und ist nicht wie bei der Ein-Prozessorlösung für den Fernsprechnotbetrieb überdimensioniert.

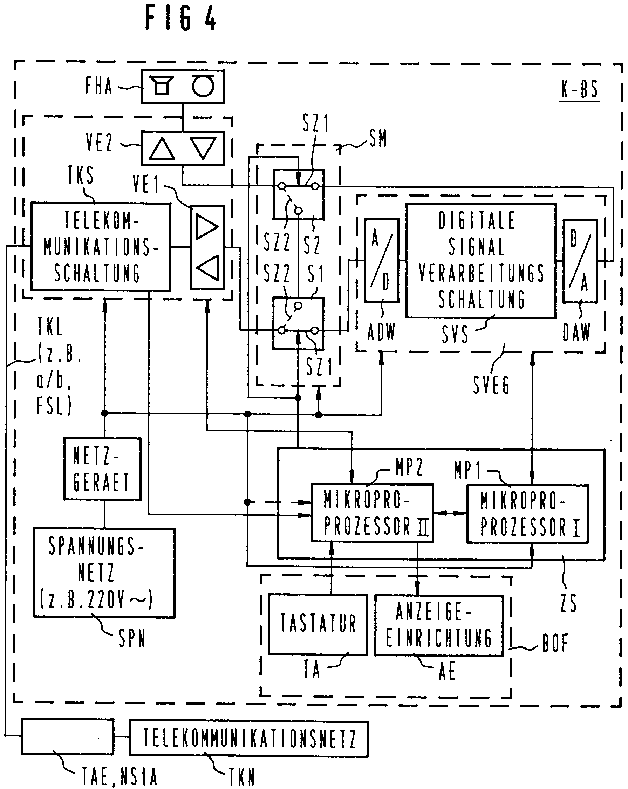

Ein Ausführungsbeispiel der Erfindung wird anhand der FIG 4 erläutert.

Die FIG 4 zeigt ausgehend von dem in FIG 2 dargestellten Schaltungsaufbau der Basisstation BS nach FIG 1 den Schaltungsaufbau der Komfort-Basisstation K-BS nach FIG 3. Der Schaltungsaufbau der Komfort-Basisstation K-BS besteht in seiner vereinfachten Form aus einer Telekommunikationseinheit TKE mit sprechschaltungs- und leitungschnittstellenspezifischen Funktionen, einer digitalen Signalverarbeitungseinrichtung SVEG, einer Zentralen Steuerung ZS zum Steuern der Funktionsabläufe in der Komfort-Basisstation K-BS und von der Zentralen Steuerung ZS steuerbare Schaltmittel SM, die in der dargestellten Weise miteinander verbunden sind. Darüber hinaus ist die Telekommunikationseinheit TKE mit dem Fernsprechhandapparat FHA und die Zentrale Steuerung ZS mit der Bedienoberfläche BOF (Tastatur TA und Anzeigeeinrichtung AE) der Komfort-Basisstation K-BS verbunden.

Die Telekommunikationseinheit TKE weist eine Telekommunikationsschaltung TKS auf, die eingangsseitig über eine Telekommunikationsleitung TKL (z.B. a/b-Leitung oder Telefonleitung) mit der Telekommunikationsanschlußeinheit TAE bzw. der Nebenstellenanlage NStA und ausgangsseitig mit einer ersten Sende-/Empfangsverstärkereinrichtung VE1 verbunden ist. Neben der ersten Sende-/Empfangsverstärkereinrichtung VE1 weist die Telekommunikationseinheit TKE noch eine zweite Sende/Empfangsverstärkereinrichtung VE2 auf, die dem Fernsprechhandapparat FHA je nach Fernsprechübertragungsrichtung voroder nachgeschaltet ist.

Die digitale Signalverarbeitungseinrichtung SVEG besteht im wesentlichen aus einer digitalen Signalverarbeitungsschaltung SVS, der eingangsseitig ein Analog-/Digital-Wandler (A/D-Wandler) ADW vorgeschaltet und ausgangsseitig ein Digital/Analog-Wandler (D/A-Wandler) DAW nachgeschaltet ist. In der digitalen Signalverarbeitungsteil SVS ist beispielsweise die digitale Signalverarbeitungseinheit SVE der DECT-Basisstation BS nach FIG 2 enthalten.

Die Verbindung zwischen der Telekommunikationseinheit TKE und der digitalen Signalverarbeitungseinrichtung SVEG wird über Schaltmittel SM hergestellt. Die Schaltmittel SM bestehen beispielsweise aus einem ersten, vorzugsweise elektronisch ausgebildeten Schalter S1 und einem zweiten, ebenfalls vorzugsweise elektronisch ausgebildeten Schalter S2. Während mit dem ersten Schalter S1 eine Verbindung zwischen der ersten Sende-/Empfangsverstärkereinrichtung VE1 und dem Analog/Digital-Wandler ADW herstellbar ist, ist mit dem zweiten Schalter S2 eine Verbindung zwischen dem Digital-/Analog-Wandler DAW und der zweiten Sende/Empfangsverstärkereinrichtung VE2 herstellbar.

Für den Funktionsablauf in der Komfort-Basisstation K-BS sind die Telekommunikationseinheit TKE, die Schaltmittel SM und die digitale Signalverarbeitungseinrichtung SVEG mit der Zentralen Steuerung ZS verbunden. Die Zentrale Steuerung ZS besteht beispielsweise aus zwei Mikroprozessoren (Mikrocontroller), einem ersten Mikroprozessor MP1 und einem zweiten Mikroprozessor MP2, die miteinander verbunden sind. Alternativ kan n die Zentrale Steuerung ZS auch nur aus einem einzigen Mikroprozessor bestehen. Während der erste Mikroprozessor MP1 - wie die Telekommunikationseinheit TKE, die Schaltmittel SM und die digitale Signalverarbeitungseinrichtung SVEG - über das Netzanschlußgerät NAG aus dem Spannungsnetz SPN versorgt wird, kann der zweite Mikroprozessor MP2
(i) - wie der erste Mikroprozessor MP1 - aus dem Spannungsnetz SPN oder
(ii) über die Telekommunikationsleitung TKL und die Telekommunikationsschaltung TKS aus dem Telekommunikationsnetz TKN
versorgt werden.

Im Rahmen der Steuerung der Funktionsabläufe in der Komfort-Basisstation K-BS durch die Zentrale Steuerung ZS übernimmt der erste Mikroprozessor MP1 im wesentlichen die Steuerung der digitalen Signalverarbeitungseinrichtung SVEG, während der zweite Mikroprozessor MP2 die Steuerung der Telekommunikationseinheit TKE, der Schaltmittel SM, der Tastatur TA und der Anzeigeeinrichtung AE (Display) übernimmt.

### Funktionsweise

Wird die Komfort-Basisstation K-BS über das Netzanschlußgerät NAG aus dem Spannungsnetz SPN versorgt (Netzspannungsbetrieb), so werden der erste Schalter S1 und der zweite Schalter S2 des Schaltmittels SM durch den zweiten Mikroprozessor MP2 in einen ersten Schaltzustand SZ1 (durchgezogene Linie in den Schaltern S1, S2) gesteuert. In diesen Betriebszustand der Komfort-Basisstation K-BS ist der Fernsprechhandapparat FHA über die digitale Signalverarbeitungseinrichtung SVEG und der Telekommunikationseinheit TKE an die Telekommunikationsanschlußeinheit TAE bzw. die Nebenstellenanlage NStA angeschlossen.

Kommt es im folgenden im Spannungsnetz SPN zu einem Spannungsausfall (Netzspannungsausfall), so werden die einzelnen Schaltungsteile der Komfort-Basisstation K-BS einschließlich des ersten Mikroprozessors MP1 und im Fall (i) des zweiten Mikroprozessors MP2 nicht mehr mit der von dem Netzanschlußgerät NAG tranformierten Netzspannung versorgt. Erkennt insbesondere der zweite Mikroprozessor MP2 diesen Zustand, so steuert dieser den ersten Schalter S1 und den zweiten Schalter S2 der Schaltmittel SM in einen zweiten Schaltzustand SZ2 (gestrichelte Linie in den Schaltern S1, S2).

Wird andererseits bei einem Netzspannungsausfall der zweite Mikroprozessor MP2 - gemäß Fall (ii) - aus dem Telekommunikationsnetz TKN versorgt, so überträgt der erste Mikroprozessor MP1, nachdem er den Netzspannungsausfall erkannt hat, eine diesen Zustand anzeigende Meldung (Zustandsmeldung) an den zweiten Mikroprozessor MP2. Aufgrund der übertragenen Zustandsmeldung weiß der zweite Mikroprozessor, daß ein Netzspannungsausfall vorliegt und steuert daraufhin den ersten Schalter S1 und den zweiten Schalter S2 der Schaltmittel SM in den zweiten Schaltzustand SZ2 (gestrichelte Linie in den Schaltern S1, S2).

In beiden Fällen (Fernsprechnotbetrieb) wird einerseits die digitale Signalverarbeitungseinrichtung SVEG nachrichtentechnisch kurzgeschlossen - d.h. abgeschaltet bzw. deaktiviert - und andererseits der Fernsprechhandapparat FHA unmittelbar über die Telekommunikationseinheit TKE mit der Telekommunikationsanschlußeinheit TAE bzw. der Nebenstellenanlage NStA verbunden.

Wie die Schalter S1, S2 beim Netzspannungsausfall vom ersten Schaltzustand SZ1 in den zweiten Schaltzustand SZ2 gesteuert werden, so werden sie im Netzspannungsbetrieb entsprechend vom zweiten Schaltzustand SZ2 wieder in den ersten Schaltzustand SZ1 gesteuert.

## Patentansprüche

1. Netzversorgtes Telekommunikationsendgerät mit einem über eine endgerätespezifische digitale Signalverarbeitungseinrichtung an ein Telekommunikationsnetz angeschlossenen Fernsprechhandapparat, das
(a) an ein Spannungsnetz (SPN) angeschlossen ist,
(b) eine Telekommunikationseinheit (TKE) aufweist, die eingangsseitig mit einer Telekommunikationsleitung (TKL) des Telekommunikationsnetzes (TKN) und ausgangsseitig mit der Signalverarbeitungseinrichtung (SVEG) verbunden ist und in der die für den Betrieb des Fernsprechhandapparates (FHA) wesentlichen Sprechschaltungsteile enthalten sind,
(c) eine Bedienoberfläche (BOF) aufweist,
(d) eine Zentrale Steuerung (ZS) zum Steuern der Funktionsabläufe in dem Telekommunikationsendgerät (K-BS) aufweist, die mit der Signalverarbeitungseinrichtung (SVEG), der Bedienoberfläche (BOF) und der Telekommunikationseinheit (TKE) verbunden ist,
**dadurch gekennzeichnet,** daß
(e) die Zentrale Steuerung (ZS) derart ausgebildet ist, daß ein Netzspannungsausfall erkannt wird,
(f) von der Zentralen Steuerung (ZS) steuerbare Schaltmittel (SM, S1, S2) vorgesehen sind, die
(f1) beim Netzspannungsausfall die Verbindungen "Telekommunikationseinheit (TKE) → Signalverarbeitungseinrichtung (SVEG)" und "Signalverarbeitungseinrichtung (SVEG) → Fernsprechhandapparat (FHA)" trennen und gleichzeitig eine Verbindung "Telekommunikationseinheit (TKE) → Fernsprechhandapparat (FHA)" herstellen,
(f2) beim Netzspannungsbetrieb die Verbindung "Telekommunikationseinheit (TKE) → Fernsprechhandapparat (FHA)" trennen und gleichzeitig die Verbindungen "Telekommunikationseinheit (TKE) → Signalverarbeitungseinrichtung (SVEG)" und "Signalverarbeitungseinrichtung (SVEG) → Fernsprechhandapparat (FHA)" herstellen.

2. Telekommunikationsendgerät nach Anspruch 1, **dadurch gekennzeichnet,** daß die Zentrale Steuerung (ZS) mindestens zwei miteinander verbundene Mikroprozessoren, einen ersten Mikroprozessor (MP1) und einen zweiten Mikroprozessor (MP2), aufweist, wobei
(a) der erste Mikroprozessor (MP1) aus dem Spannungsnetz (SPN) versorgt wird und mit der Signalverarbeitungseinrichtung (SVEG) und der Telekommunikationseinheit (TKE) verbunden ist,
(b) der zweite Mikroprozessor (MP2) beim Netzspannungsausfall über die Telekommunikationsleitung (TKL) aus dem Telekommunikationsnetz (TKN) und beim Netzspannungsbetrieb aus dem Telekommunikationsnetz (TKN) oder aus dem Spannungsnetz (SPN) versorgt wird und mit der Telekommunikationseinheit (TKE) sowie der Bedienoberfläche (BOF) verbunden ist.

3. Verwendung des Telekommunikationsendgerätes nach Anspruch 1 oder 2 als Komfort-Basisstation eines DECT-Telefons, wobei der DECT-relevante Teil der Komfort-Basisstation als digitale Signalverarbeitungseinrichtung ausgebildet ist.

4. Verwendung des Telekommunikationsendgerätes nach Anspruch 1 oder 2 als Telefon-Anrufbeantworter, wobei der Anrufbeantworter als digitale Signalverarbeitungseinrichtung ausgebildet ist.

5. Verwendung des Telekommunikationsendgerätes nach Anspruch 1 oder 2 als Lauthör/Freisprech-Telefon, wobei die Lauthör/Freisprech-Funktion in der digitalen Signalverarbeitungseinrichtung realisiert ist.
